# EUROPEAN PATENT SPECIFICATION

(11) **EP 3 163 113 B1**
(45) Date of publication and mention of the grant of the patent: **03.06.2020**
(21) Application number: 15812757.1
(22) Date of filing: 26.06.2015
(51) Int. Cl.: F16D 65/22, F16D 51/22, F16D 121/04, F16D 121/24, F16D 123/00, F16D 125/06, F16D 125/40, F16D 125/52, F16D 51/24, B60T 13/58, B60T 13/74, F16D 125/48

(54) **DRUM BRAKE DEVICE**
TROMMELBREMSVORRICHTUNG
DISPOSITIF DE FREIN À TAMBOUR

(30) Priority: 26.06.2014 JP 2014131521
(43) Date of publication of application: 03.05.2017
(73) Proprietor: Akebono Brake Industry Co., Ltd., Tokyo 103-8534 (JP)
(72) Inventor: ISHIKAWA Hiroyasu, Tokyo 103-8534 (JP); KATO Hiroyuki, Tokyo 103-8534 (JP); AKADA Hironori, Tokyo 103-8534 (JP); SUZUKI Michio, Tokyo 103-8534 (JP)
(74) Representative: Grünecker Patent- und Rechtsanwälte PartG mbB
(86) International application number: PCT/JP2015/068591
(87) International publication number: WO 2015/199237

(56) References cited:
- WO-A1-2004/059189
- DE-A1-102005 025 297
- JP-A- 2001 107 999
- JP-A- 2013 053 675
- US-A- 4 369 863

## Description

### Technical Field

The present invention relates to a drum brake apparatus. A generic drum brake apparatus having the features defined in the preamble of claim 1, is for instance known from DE 10 2005 025297 A1.

### Background Art

A parking brake for a vehicle, which can be operated by an electromechanical actuator, is known (refer to Patent Document 1).

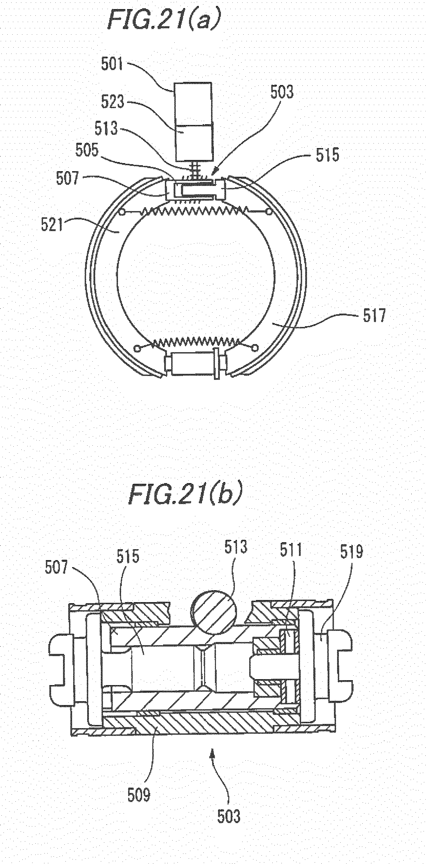

As shown in Fig. 21(a), this type of parking brake is configured as a duo servo type drum brake and has an expanding lock 503 which is floatingly supported and can be operated by an electromechanical actuator 501 disposed on a wheel carrier, and the expanding lock 503 acts on two brake shoes.

The expanding lock 503 is configured of a threaded nut-spindle assembly 505. As shown in Fig. 21(b), a threaded nut 507 of the threaded nut-spindle assembly 505 is rotatably supported by a thrust bearing 511 in a housing 509 of the expanding lock 503. A straight gear on the outer peripheral surface of the threaded nut 507 is in a state of being engaged with a worm gear 513. If the electromechanical actuator 501 drives the worm gear 513, the threaded nut 507 transitions to rotation. In this way, a spindle 515 performs transport motion toward the left in the drawing, thereby pressing a first brake shoe 517 against a brake drum. An actuating force obtained in this way is supported by a pressurizing member 519 through the thrust bearing 511. As a reaction, a second brake shoe 521 is pressed against the brake drum, and the expanding lock 503 is self-aligned in the brake drum. That is, the threaded nut-spindle assembly 505 is horizontally freely movable. In addition, a reduction gear unit 523 is provided between the electromechanical actuator 501 and the worm gear 513. Further disc brake mechanisms are described in US 4 369 863 A and WO 2004/059189 A1.

### Citation List

### Patent Document

[Patent Document 1] JP-B2-4800767
[Patent Document 2] JP-A-2003-072534

### Summary of Invention

### Technical Problem

However, the parking brake of the related art described above is a brake exclusively for parking use, which is disposed in a central area of a brake disc in a disc brake for service braking, and it is difficult to apply it to the service braking.

Further, as in a vehicle brake apparatus 550 in Patent Document 2 shown in Fig. 22, a brake apparatus in which a wheel cylinder 551 for service braking and an actuator 553 for parking braking are provided side by side between upper end portions of a pair of brake shoes 555 and 557 has also been proposed. However, the wheel cylinder 551 and the actuator 553 must be provided side by side in a limited space on the inside of a drum 559 and a hub which is a rotating member (not shown) is also present in the space, and thus layout characteristics are not good.

The present invention has been made in view of the above circumstances, and an object thereof is to provide a compact drum brake apparatus provided with an electric parking brake apparatus.

### Solution to Problem

The above object of the present invention would be achieved by the following configurations. To solve the aforementioned problem, a brake drum apparatus having in combination all the features of items 1 and 2 of the following is provided. Further preferred embodiments may be the embodiments described in items 3 to 6.
(1) A drum brake apparatus including: a pair of brake shoes which are disposed so as to face an inner peripheral surface of a brake drum and is movably supported on a backing plate; a wheel cylinder which is interposed between adjacent ends on one side of the pair of brake shoes and expands the pair of brake shoes by pushing the adjacent ends on one side of the pair of brake shoes at a tip portion of a first piston and a tip portion of a second piston by fluid pressure; an extension mechanism which is disposed between a rear end portion of the first piston and a rear end portion of the second piston in the wheel cylinder and is rotated in one direction, thereby driving the first piston and the second piston in a direction away from each other; and an electric actuator for rotating the extension mechanism.
   According to the drum brake apparatus having the configuration of the above (1), the extension mechanism for parking braking is disposed between the rear end portion of the first piston and the rear end portion of the second piston in the wheel cylinder and lies on substantially the same straight line as the wheel cylinder for service braking. Further, the first piston and the second piston are used in common in the wheel cylinder and the extension mechanism. Therefore, it is possible to obtain a compact drum brake apparatus provided with an electric parking brake apparatus, and layout characteristics are improved.
(2) The drum brake apparatus according to the above (1), wherein the extension mechanism includes a drive gear which is rotated by a drive shaft of the electric actuator, and a nut member in which a female screw portion which is screwed to a male screw portion coaxially provided at the rear end portion of the first piston is provided on one end side thereof, a bearing portion which rotatably comes into contact with the rear end portion of the second piston is provided on the other end side thereof,
   and a straight gear which is engaged with the drive gear is provided in an outer periphery thereof, and at least the male screw portion and the female screw portion in the extension mechanism communicate with a liquid chamber of the wheel cylinder.
   According to the drum brake apparatus having the configuration of the above (2), the drive gear is rotated by the drive shaft of the electric actuator. The rotation of the drive gear is transmitted to the straight gear of the nut member. In the nut member which is rotated by the drive gear, the female screw portion on the inside thereof is rotated with respect to the male screw portion of the first piston. In the first piston, the rotation thereof is restricted, whereby a tip portion thereof pushes the brake shoe on one side due to the rotation of the female screw portion screwed to the male screw portion. In this way, an upper end portion of the brake shoe on one side is pushed out toward the outer periphery side, thereby being pressed against the brake drum. Further, due to a reaction force thereof, the nut member and the bearing portion are pushed out toward the outer periphery side, and thus an upper end portion of the brake shoe on the other side is pressed against the brake drum. As a result, a braking force is generated by the pair of brake shoes.
   A screw engaging portion between at least the female screw portion and the male screw portion in the extension mechanism communicates with the liquid chamber of the wheel cylinder and is lubricated with a brake fluid. A sufficient amount of brake fluid is present in the liquid chamber, and therefore, in the screw engaging portion of the extension mechanism, a problem (for example, a rise in rotational resistance, wear of a sliding surface, or the like) due to running out of a lubricant during a period of long-term use does not occur. That is, in the extension mechanism, the screw engaging portion between the female screw portion and the male screw portion, which is a sliding contact in which sliding portion resistance easily rises, is reliably lubricated with the brake fluid. Therefore, a sufficient amount of brake fluid is present with respect to a sliding surface, and therefore, the screw engaging portion is not easily affected by deterioration of lubricating performance due to intervention of abrasion powder and generation of heat is suppressed, whereby a decrease in efficiency does not easily occur.
(3) The drum brake apparatus according to the above (2), wherein an oil hole which makes the female screw portion and the bearing portion communicate with each other is formed in the nut member.
   According to the drum brake apparatus having the configuration of the above (3), the female screw portion communicates with the liquid chamber of the wheel cylinder through the oil hole bored in the nut member, and therefore, the screw engaging portion between the female screw portion and the male screw portion would be reliably lubricated with the brake fluid. Further, the oil hole is bored on the side opposite to the screw engaging portion of the nut member formed in a cap nut shape, whereby an air release property of an internal space of the nut member is improved. Further, in the internal space which communicates with the liquid chamber through the oil hole, when the female screw portion of the nut member and the male screw portion of the first piston rotate relatively, a change in volume is not inhibited, and thus it is possible to smoothly move the first piston and second piston.
(4) The drum brake apparatus according to the above (2) or (3), wherein the straight gear and the drive gear communicate with the liquid chamber of the wheel cylinder, and the drive shaft of the electric actuator is disposed liquid-tightly with respect to the liquid chamber of the wheel cylinder.
   According to the drum brake apparatus having the configuration of the above (4), the drive shaft of the electric actuator penetrates into the liquid chamber of the wheel cylinder in a liquid-tight manner. The drive shaft penetrating into the liquid chamber drives the extension mechanism provided in the liquid chamber. That is, a power transmission element between the extension mechanism and the drive shaft is in the brake fluid. The rotational motion of the drive shaft is converted to an extension operation (linear motion) in which the first piston and the second piston are driven in a direction away from each other by the extension mechanism in which the nut member is rotated by the drive gear. For this reason, the extension mechanism has a screw engaging portion or the bearing portion, and the screw engaging portion or the bearing portion is sealed in the liquid chamber. Further, an engaging portion between the drive gear which is rotated by the drive shaft of the electric actuator and the straight gear of the nut member is also lubricated with the brake fluid. Therefore, even in an engaging portion of the drive gear, a change in viscosity resistance under a low temperature environment does not easily occur unlike with lubrication with grease, and a variation in rotation sliding resistance is reduced. Therefore, it is possible to use various gears for the power transmission element.
(5) The drum brake apparatus according to any one of the above (2) to (4), wherein the drive gear is a worm gear provided in the drive shaft.
   According to the drum brake apparatus having the configuration of the above (5), the drive gear which is engaged with the straight gear of the nut member is a worm gear having irreversibility, and therefore, return rotation of the nut member due to the reaction force that the brake shoes receive is prevented, Therefore, a reversible screw having a large lead may also be used for each of the male screw portion and the female screw portion in the extension mechanism.
(6) The drum brake apparatus according to any one of the above (2) to (4), wherein the drive gear is a final gear of a transmission gear device which transmits a rotation of the drive shaft.

According to the drum brake apparatus having the configuration of the above (6), the drive gear which is engaged with the straight gear of the nut member is the final gear in the transmission gear device composed of, for example, a group of a plurality of spur gears. In such a transmission gear device, an axis line of the drive shaft of the electric actuator may be disposed in a direction along an axis line of the nut member. As a result, in the drum brake apparatus, the dimensions of a protruding portion of the electric actuator on the vehicle mounting surface side may be reduced. Further, the drive gear which is engaged with the straight gear of the nut member is a spur gear having reversibility, and therefore, in order to prevent the return rotation of the nut member due to a reaction force that the brake shoes receive, it is desirable that an irreversible screw having a small lead is used for each of the male screw portion and the female screw portion in the extension mechanism.

### Advantageous Effects of Invention

According to the drum brake apparatus according to the present invention, it is possible to provide a compact drum brake apparatus provided with an electric parking brake apparatus.

The present invention has been briefly described above. In addition, the details of the present invention will be further clarified by reading through a mode for carrying out the invention (hereinafter referred to as an "embodiment") which is described below, with reference to the accompanying drawings.

### Brief Description of Drawings

Fig. 1(a) is a front view of a drum brake apparatus according to a first embodiment of the present invention, and Fig. 1(b) is a side view of the drum brake apparatus of Fig. 1(a).
Fig. 2 is a cross-sectional view taken along line II-II of the drum brake apparatus shown in Fig. 1.
Fig. 3(a) is a perspective view when the drum brake apparatus shown in Fig. 1 is viewed from the brake drum side, and Fig. 3(b) is a perspective view when the drum brake apparatus of Fig. 3(a) is viewed from the vehicle mounting surface side.
Fig. 4 is a perspective view of an electric cylinder assembly composed of an electric actuator and a wheel cylinder.
Fig. 5(a) is a side view of the electric cylinder assembly shown in Fig. 4, and Fig. 5(b) is a cross-sectional view taken along line V-V of Fig. 5(a).
Fig. 6 is a side view of the electric actuator and an extension mechanism with a housing removed therefrom.
Fig. 7(a) is a perspective view when a drum brake apparatus according to a second embodiment of the present invention, which is provided with an electric cylinder assembly having a spur gear group, is viewed from the vehicle mounting surface side, and Fig. 7(b) is a perspective view when the drum brake apparatus of Fig. 7(a) is viewed from a different angle.
Fig. 8 is a perspective view of an electric actuator, a transmission gear device, and an extension mechanism of the electric cylinder assembly with a housing shown in Fig. 7 removed therefrom.
Fig. 9 is an enlarged cross-sectional view of a main section of a drum brake apparatus according to a third embodiment of the present invention.
Fig. 10 is a vertical cross-sectional view of a wheel cylinder in a drum brake apparatus according to a fourth embodiment of the present invention.
Fig. 11 is a vertical cross-sectional view of a wheel cylinder in a drum brake apparatus according to a fifth embodiment of the present invention.
Fig. 12(a) is a front view of a drum brake apparatus according to a sixth embodiment of the present invention, and Fig. 12(b) is a side view of the drum brake apparatus of Fig. 12(a).
Fig. 13 is a cross-sectional view taken along line XIII-XIII of the drum brake apparatus shown in Fig. 12.
Fig. 14(a) is a perspective view when the drum brake apparatus shown in Fig. 12 is viewed from the brake drum side, and Fig. 14(b) is a perspective view when the drum brake apparatus of Fig. 14(a) is viewed from the vehicle mounting surface side.
Fig. 15 is a perspective view of an electric cylinder assembly composed of an electric actuator and a wheel cylinder.
Fig. 16(a) is a side view of the electric cylinder assembly shown in Fig. 15, and Fig. 16(b) is a cross-sectional view taken along line XVI-XVI of Fig. 16(a).
Fig. 17 is a side view of the electric actuator and an extension mechanism with a housing removed therefrom.
Fig. 18 is an enlarged cross-sectional view of a main section of a drum brake apparatus according to a seventh embodiment of the present invention.
Fig. 19 is a vertical cross-sectional view of a wheel cylinder in a drum brake apparatus according to an eighth embodiment of the present invention.
Fig. 20 is a vertical cross-sectional view of a wheel cylinder in a drum brake apparatus according to a ninth embodiment of the present invention.
Fig. 21(a) is a simplified diagram of an electromechanically-operated parking brake of the related art, and Fig. 21(b) is a cross-sectional view of an expanding lock which is usable in the parking brake of Fig. 21(a).

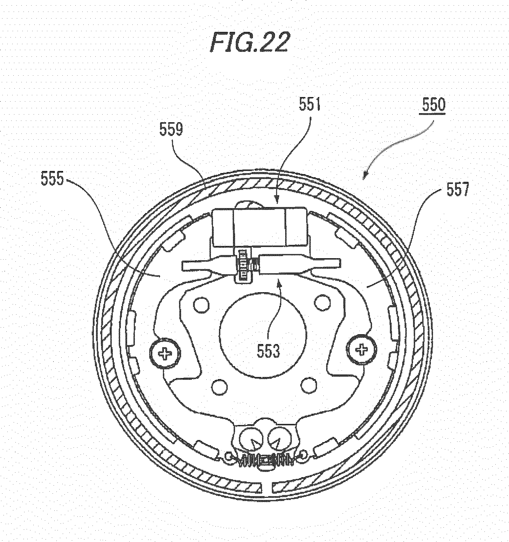

Fig. 22 is a front view of a vehicle brake apparatus of the related art.

### Description of Embodiments

Hereinafter, embodiments of the present invention will be described with reference to the drawings.

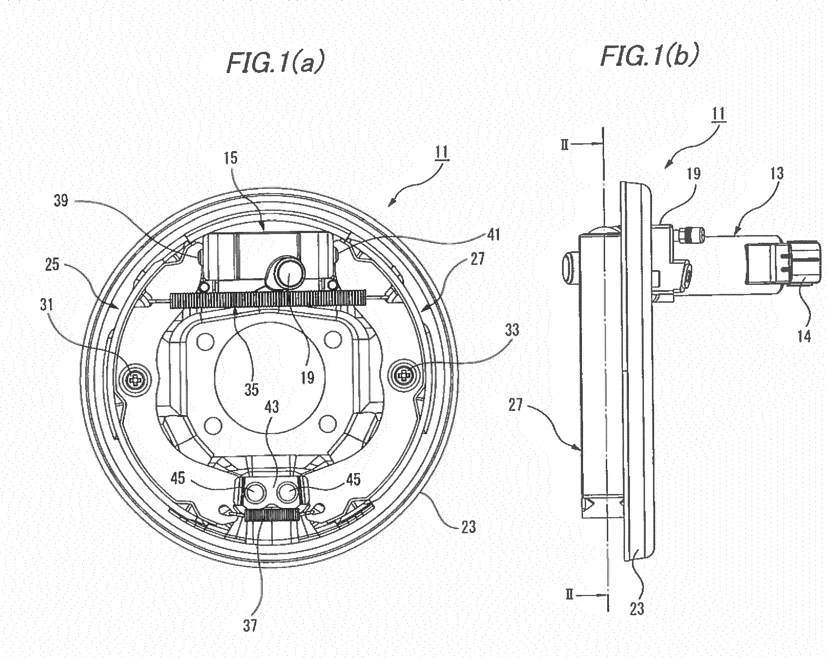

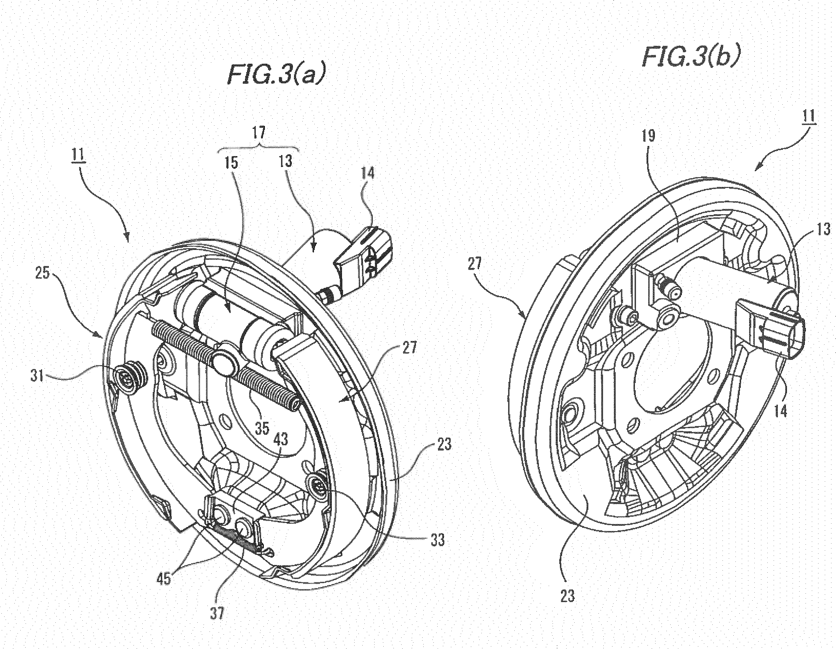

As shown in Figs. 1 to 3, a drum brake apparatus 11 according to a first embodiment of the present invention is configured to include, as primary members, a first brake shoe 25 and a second brake shoe 27 which are a pair of brake shoes, a wheel cylinder 15 which is interposed between adjacent ends on one side (the upper side in Figs. 1(a) and 1(b)) of the first brake shoe 25 and the second brake shoe 27, an extension mechanism 21 which is disposed between a rear end portion of a first piston 39 and a rear end portion of a second piston 41 in the wheel cylinder 15, and an electric actuator 13 for rotating the extension mechanism 21.

The drum brake apparatus 11 is integrally fixed to a vehicle body in a posture in which a backing plate 23 is substantially perpendicular to the axis of rotation of a wheel (not shown), On the backing plate 23, the first brake shoe 25 and the second brake shoe 27 which are a pair of brake shoes each having a substantially arc shape are disposed in an up-and-down direction substantially along left and right outer peripheral edges.

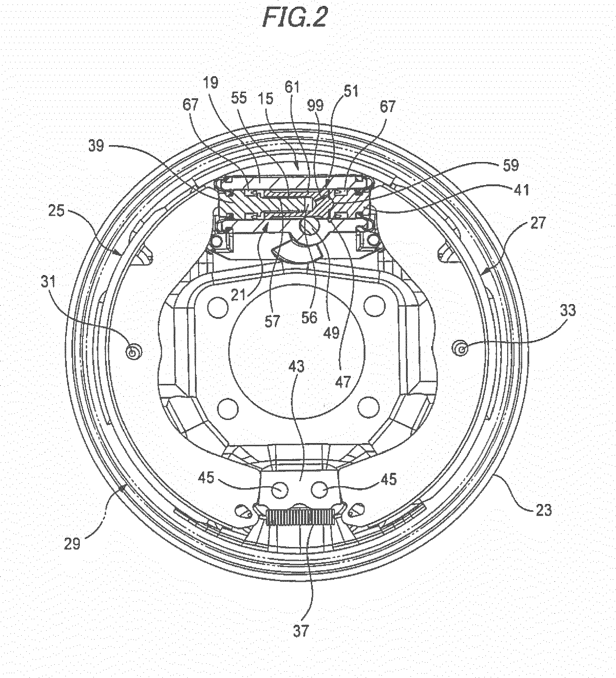

The first brake shoe 25 and the second brake shoe 27 are disposed so as to face the inner peripheral surface of a brake drum 29 (refer to Fig. 2). The first brake shoe 25 and the second brake shoe 27 are elastically supported so as to be movable on the backing plate 23 by a first shoe holding device 31 and a second shoe holding device 33 and are made to be expandable. Further, the first brake shoe 25 and the second brake shoe 27 are elastically biased in a direction approaching each other by a pair of first shoe return spring 35 and second shoe return spring 37.

The wheel cylinder 15 as a fluid-type actuator is interposed between the adjacent ends on one side of the first brake shoe 25 and the second brake shoe 27 on the upper side of Fig. 1(a). The wheel cylinder 15 is mounted on the backing plate 23, as shown in Fig. 2, and expands the first brake shoe 25 and the second brake shoe 27 by pushing the adjacent ends on one side in a direction away from each other by the first piston 39 and the second piston 41 which are driven by the pressure (fluid pressure) of the brake fluid which is pressure-supplied from a master cylinder (not shown) to a liquid chamber 47, at the time of a service braking operation.

An anchor 43 is fixed to the backing plate 23 between adjacent ends on the other side of the first brake shoe 25 and the second brake shoe 27 on the lower side of Fig. 1(a). The anchor 43 is integrally fixed to the backing plate 23 by a pair of rivets 45. The anchor 43 takes a brake reaction force when a braking force is generated due to upper end portions of the first brake shoe 25 and the second brake shoe 27 being pressed against the brake drum 29 by being separated from each other by the wheel cylinder 15.

As shown in Fig, 2, the extension mechanism 21 which lies on substantially the same straight line as the wheel cylinder 15 is disposed in the liquid chamber 47 between the rear end portion of the first piston 39 and the rear end portion of the second piston 41 in the wheel cylinder 15. The extension mechanism 21 is rotated in one direction, thereby driving the first piston 39 and the second piston 41 in a direction away from each other, at the time of a parking braking operation.

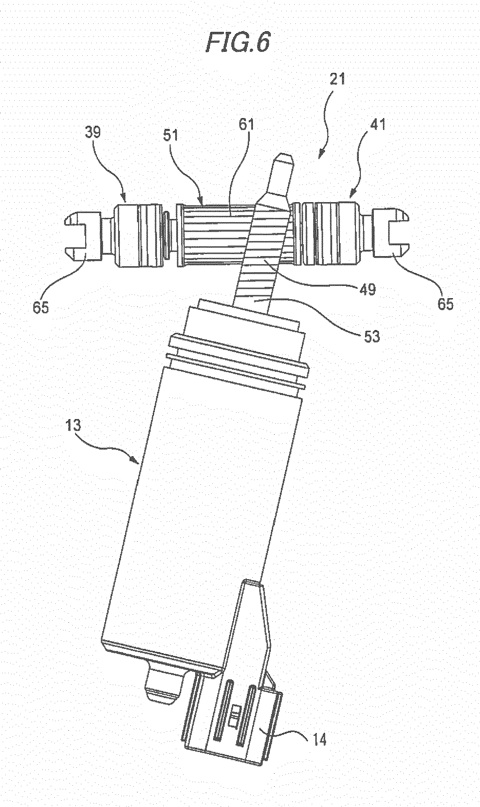

As shown in Figs. 2 and 6, the extension mechanism 21 in the first embodiment has a worm gear 49 which is a drive gear, and a nut member 51. The worm gear 49 is configured and rotated integrally with a drive shaft 53 of the electric actuator 13. The nut member 51 has, on one end side thereof, a female screw portion 57 which is screwed to a male screw portion 55 coaxially formed at the rear end portion of the first piston 39. Further, the nut member 51 has, on the other end side thereof, a bearing portion 59 which rotatably comes into contact with the rear end portion of the second piston 41, and a straight gear 61 which is engaged with the worm gear 49 disposed on the lower side is formed at the outer periphery of the nut member 51. A contact portion between the nut member 51 and the second piston 41 is made to be the semispherical bearing portion 59 shown in Fig. 2. The contact portion would also be made to be a bearing (a thrust bearing) or a dry bearing. Further, an oil hole 99 which makes the female screw portion 57 and the bearing portion 59 communicate with each other is bored in the nut member 51.

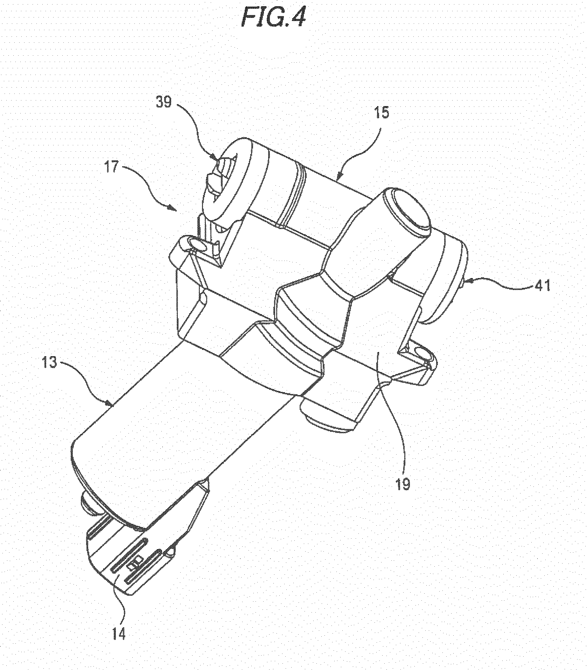

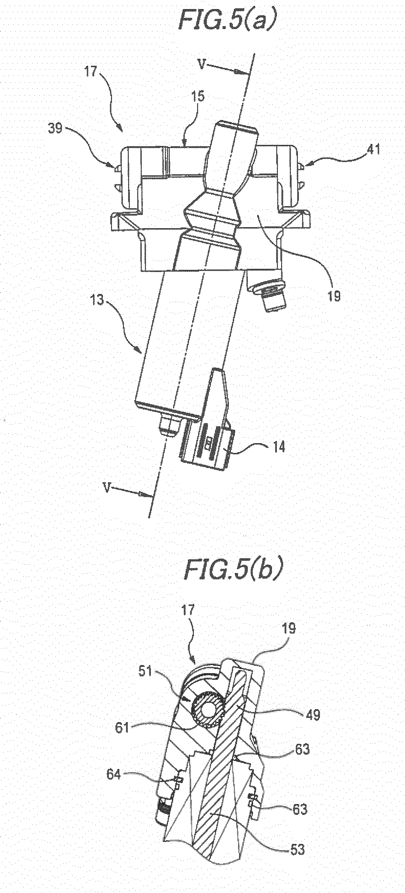

As shown in Fig 4, the electric actuator 13 and the wheel cylinder 15 configures an electric cylinder assembly 17. In the electric cylinder assembly 17, the extension mechanism 21 is liquid-tightly covered with the liquid chamber 47 which is defined inwardly by a housing 19. Further, as shown in Fig. 5(b), the electric actuator 13 is fixed to the housing 19 through a snap ring 64. A connector part 14 to which a power feed connector (not shown) is fitted from an axial direction is provided at a rear end portion of the electric actuator 13. Each of a gap between the housing 19 and the electric actuator 13 and a gap between the housing 19 and the drive shaft 53 is liquid-tightly sealed by an O-ring 63 (refer to Fig. 5(b)). That is, the drive shaft 53 of the electric actuator 13 is disposed liquid-tightly with respect to the liquid chamber 47 of the wheel cylinder 15.

The first piston 39 and the second piston 41 are respectively engaged with the first brake shoe 25 and the second brake shoe 27 through engagement claws 65 (refer to Fig. 6). The first piston 39 and the second piston 41 are engaged with these brake shoes by the engagement claws 65, whereby the rotation thereof is restricted. Further, in the housing 19, cups 67 (refer to Fig. 2) for liquid-tightly sealing the liquid chamber 47 are installed at portions through which the first piston 39 and the second piston 41 penetrate. The expansion of the first brake shoe 25 and the second brake shoe 27 at the time of the parking braking operation is performed by the linear movements of the first piston 39 and the second piston 41 by the rotation of the straight gear 61.

That is, the first piston 39 and the second piston 41 are driven, at the time of the parking braking operation, by the extension mechanism 21 and are driven, at the time of the service braking operation, by the pressure of the brake fluid which is pressure-supplied to the liquid chamber 47 of the wheel cylinder 15.

Next, an operation of the drum brake apparatus 11 having the configuration described above will be described.

In the drum brake apparatus 11 according to the first embodiment, the extension mechanism 21 for the parking braking is disposed between the rear end portion of the first piston 39 and the rear end portion of the second piston 41 in the wheel cylinder 15 and lies on substantially the same straight line as the wheel cylinder 15 for the service braking. Further, the first piston 39 and the second piston 41 are used in common in the wheel cylinder 15 and the extension mechanism 21. Therefore, it is possible to obtain a compact drum brake apparatus 11 provided with an electric parking brake apparatus, and layout characteristics are improved.

Further, in the drum brake apparatus 11 according to the first embodiment, the drive shaft 53 of the electric actuator 13 penetrates into the liquid chamber 47 of the wheel cylinder 15 in a liquid-tight manner. The drive shaft 53 penetrating into the liquid chamber 47 drives the extension mechanism 21 provided in the liquid chamber 47. That is, a power transmission element between the extension mechanism 21 and the drive shaft 53 is in the brake fluid.

The rotational motion of the drive shaft 53 is converted to an extension operation (linear motion) in which the first piston 39 and the second piston 41 are driven in a direction away from each other by the extension mechanism 21 in which the nut member 51 is rotated by the worm gear 49. For this reason, the extension mechanism 21 has a screw engaging portion or the bearing portion 59, and the screw engaging portion or the bearing portion 59 is sealed in the liquid chamber 47. Further, an engaging portion between the worm gear 49 which is rotated by the drive shaft 53 of the electric actuator 13 and the straight gear 61 of the nut member 51 is also lubricated with the brake fluid. Therefore, even in an engaging portion of the worm gear 49 in which due to the surfaces of teeth being in sliding contact with each other, a contact surface is heated to a high temperature, whereby a decrease in efficiency easily occurs and sliding portion resistance easily rises, a change in viscosity resistance under a low temperature environment does not easily occur unlike with lubrication with grease and a variation in rotation sliding resistance is reduced.

Therefore, according to the drum brake apparatus 11 according to the first embodiment, the transmission efficiency of a parking force is stable.

Further, in the drum brake apparatus 11 according to the first embodiment, at the time of the parking braking operation, the worm gear 49 is rotated by the drive shaft 53 penetrating into the liquid chamber 47. The rotation of the worm gear 49 is transmitted to the straight gear 61 of the nut member 51. In the nut member 51 which is rotated by the worm gear 49, the female screw portion 57 on the inside thereof is rotated with respect to the male screw portion 55 of the first piston 39. In the first piston 39, the rotation thereof is restricted, whereby a tip portion thereof pushes the first brake shoe 25 due to the rotation of the female screw portion 57 screwed to the male screw portion 55. In this way, the upper end portion of the first brake shoe 25 is pushed out toward the outer periphery side, thereby being pressed against the brake drum 29. Further, due to a reaction force thereof, the nut member 51 and the bearing portion 59 are pushed out toward the outer periphery side, and thus the upper end portion of the second brake shoe 27 is pressed against the brake drum 29. As a result, a braking force is generated by the first brake shoe 25 and the second brake shoe 27.

Sliding surfaces such as screw engaging portion between the worm gear 49 and the straight gear 61 in the extension mechanism 21, a screw engaging portion between the female screw portion 57 and the male screw portion 55, and the bearing portion 59 which comes into contact with the nut member 51 are lubricated in the liquid chamber 47, because a sufficient amount of brake fluid is present in the liquid chamber 47. Therefore, in the extension mechanism 21, a problem (for example, a rise in rotational resistance, wear of a sliding surface, or the like) due to running out of a lubricant during a period of long-term use does not occur. That is, in the extension mechanism 21, the screw engaging portion between the female screw portion 57 and the male screw portion 55, which is a sliding contact in which sliding portion resistance easily rises, is reliably lubricated with the brake fluid. Therefore, a sufficient amount of brake fluid is present with respect to the sliding surface, and therefore, the screw engaging portion is not easily affected by deterioration of lubricating performance due to intervention of abrasion powder and generation of heat is suppressed, whereby a decrease in efficiency does not easily occur.

Further, in the drum brake apparatus 11 according to the first embodiment, the female screw portion 57 communicates with the liquid chamber 47 of the wheel cylinder 15 through the oil hole 99 bored in the nut member 51, and therefore, the screw engaging portion between the female screw portion 57 and the male screw portion 55 would be reliably lubricated with the brake fluid. Further, the oil hole 99 is bored on the side opposite to the screw engaging portion of the nut member 51 formed in a cap nut shape, whereby an air release property of an internal space 56 of the nut member 51 is improved. Further, in the internal space 56 which communicates with the liquid chamber 47 through the oil hole 99, when the female screw portion 57 of the nut member 51 and the male screw portion 55 of the first piston 39 rotate relatively, a change in volume is not inhibited, and thus it is possible to smoothly move the first piston 39 and second piston 41.

Further, in the drum brake apparatus 11 according to the first embodiment, a drive gear which is engaged with the straight gear 61 of the nut member 51 is the worm gear 49 having irreversibility, and therefore, return rotation of the nut member 51 due to the reaction force that the brake shoes receive is prevented. Therefore, even if energization to the electric actuator 13 is stopped, braking of the parking brake is prevented from being released due to return rotation of the nut member 51. Therefore, a reversible screw having a large lead would also be used for each of the male screw portion 55 and the female screw portion 57 in the extension mechanism 21.

Next, modification examples of the electric cylinder assembly 17 described above will be described.

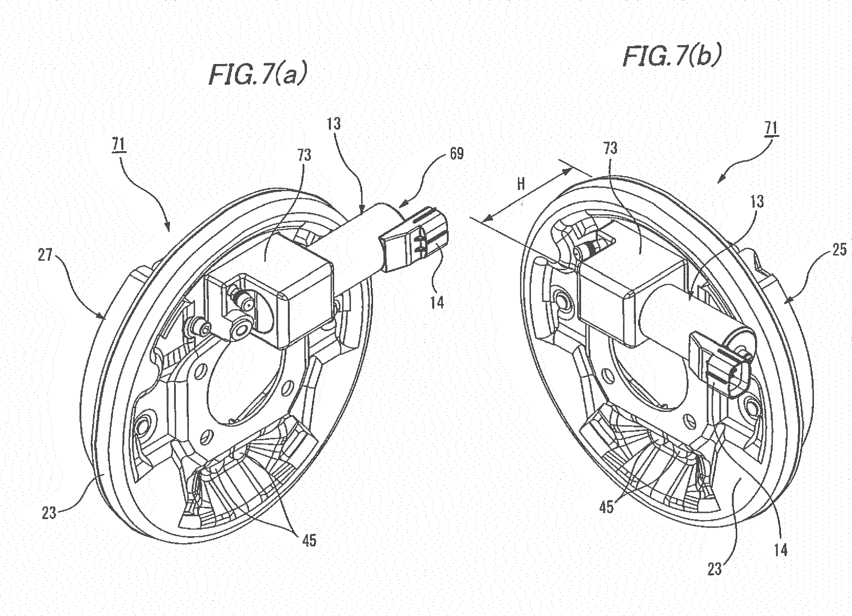

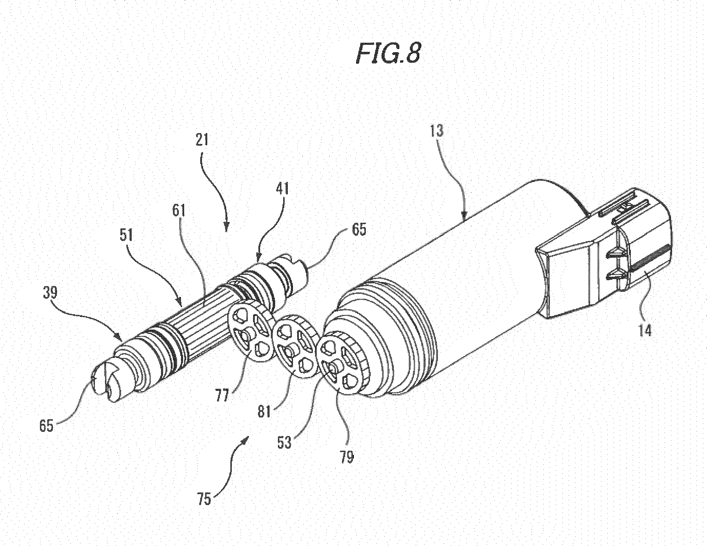

Fig. 7(a) is a perspective view when a drum brake apparatus 71 according to a second embodiment of the present invention, which is provided with an electric cylinder assembly 69 having a spur gear group, is viewed from the vehicle mounting surface side, and Fig. 7(b) is a perspective view when the drum brake apparatus 71 of Fig. 7(a) is viewed from a different angle. Fig. 8 is a perspective view of the electric actuator 13, a transmission gear device 75, and the extension mechanism 21 of the electric cylinder assembly 69 with a housing 73 shown in Fig. 7 removed therefrom.

In the drum brake apparatus 71 according to the second embodiment, as shown in Fig, 8, a drive gear in the electric cylinder assembly 69 is a final gear 77 of the transmission gear device 75 which transmits the rotation of the drive shaft 53. The transmission gear device 75 is configured of a spur tooth drive gear 79 which is fixed to the drive shaft 53, a spur tooth intermediate gear 81 which is engaged with the spur tooth drive gear 79, and the final gear 77 composed of a spur gear which is engaged with the spur tooth intermediate gear 81. The final gear 77 is engaged with the straight gear 61 of the nut member 51.

According to the drum brake apparatus 71, a drive gear which is engaged with the straight gear 61 of the nut member 51 is the final gear 77 in the transmission gear device 75 composed of a group of a plurality of spur gears (the spur tooth drive gear 79, the spur tooth intermediate gear 81, and the final gear 77). In this way, in the electric cylinder assembly 69, the axis line of the drive shaft 53 of the electric actuator 13 would be disposed in a direction along the axis line of the nut member 51. As a result, in the drum brake apparatus 71, as shown in Fig. 7(b), a dimension H of a protruding portion of the electric actuator 13 on the vehicle mounting surface side may be reduced.

Further, the final gear 77 which is engaged with the straight gear 61 of the nut member 51 is a spur gear having reversibility, and therefore, in order to prevent the return rotation of the nut member 51 due to the reaction force that the first brake shoe 25 and the second brake shoe 27 receive, it is desirable that an irreversible screw having a small lead is used for each of the male screw portion 55 and the female screw portion 57 in the extension mechanism 21.

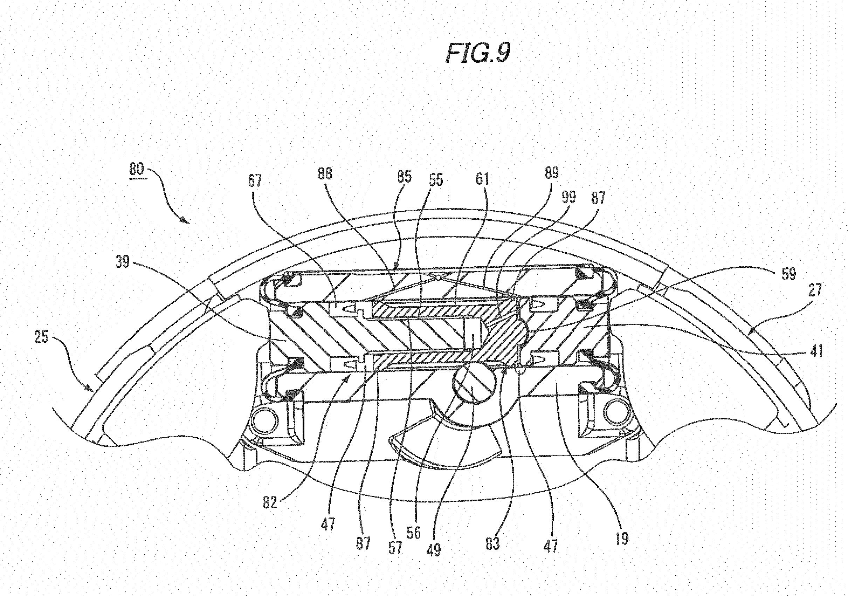

Fig. 9 is an enlarged cross-sectional view of a main section of a drum brake apparatus 80 according to a third embodiment of the present invention.

The drum brake apparatus 80 according to the third embodiment has substantially the same configuration as that of the drum brake apparatus 11 according to the first embodiment except that a wheel cylinder 85 and an extension mechanism 82 are used instead of the wheel cylinder 15 and the extension mechanism 21 in the drum brake apparatus 11 according to the first embodiment, and therefore, the same members are denoted by the same reference numerals and the detailed description thereof is omitted.

The extension mechanism 82 in the third embodiment has the worm gear 49 which is a drive gear, and a nut member 83. The nut member 83 has the female screw portion 57 on one end side and has the bearing portion 59 on the other end side. Further, at the outer periphery of the nut member 83, a pair of O-rings 87 is disposed on the sides of both ends with the straight gear 61 interposed therebetween, and a gap between the outer periphery of the nut member 83 and the inner surface of a cylinder wall of the wheel cylinder 85 is liquid-tightly sealed. That is, the liquid chamber 47 of the wheel cylinder 85 is defined to be divided into two parts on the rear end side of the first piston 39 and the rear end side of the second piston 41 by the pair of O-rings 87. Further, the oil hole 99 which makes the female screw portion 57 and the bearing portion 59 communicate with each other is bored in the nut member 83.

Further, an oil hole 88 which communicates with the liquid chamber 47 on the rear end side of the first piston 39, and an oil hole 89 which communicates with the liquid chamber 47 on the rear end side of the second piston 41 are bored in the cylinder wall of the wheel cylinder 85 in the housing 19 and communicate with a master cylinder (not shown).

Therefore, the first piston 39 and the second piston 41 are driven, at the time of the parking braking operation, by the extension mechanism 82 and are driven, at the time of the service braking operation, by the pressure of the brake fluid which is pressure-supplied to each of the two liquid chambers 47 of the wheel cylinder 85.

That is, the screw engaging portion between the male screw portion 55 and the female screw portion 57 in the extension mechanism 82 communicates with the liquid chambers 47 on the rear end side of the first piston 39 and the rear end side of the second piston 41 in the housing 19. However, the engaging portion between the straight gear 61 and the worm gear 49 does not communicate with the liquid chambers 47 in the housing 19. Therefore, an area between the inner surface of the cylinder wall of the wheel cylinder 85 and the straight gear 61 is filled with grease, and thus the engaging portion between the straight gear 61 and the worm gear 49 is lubricated with grease.

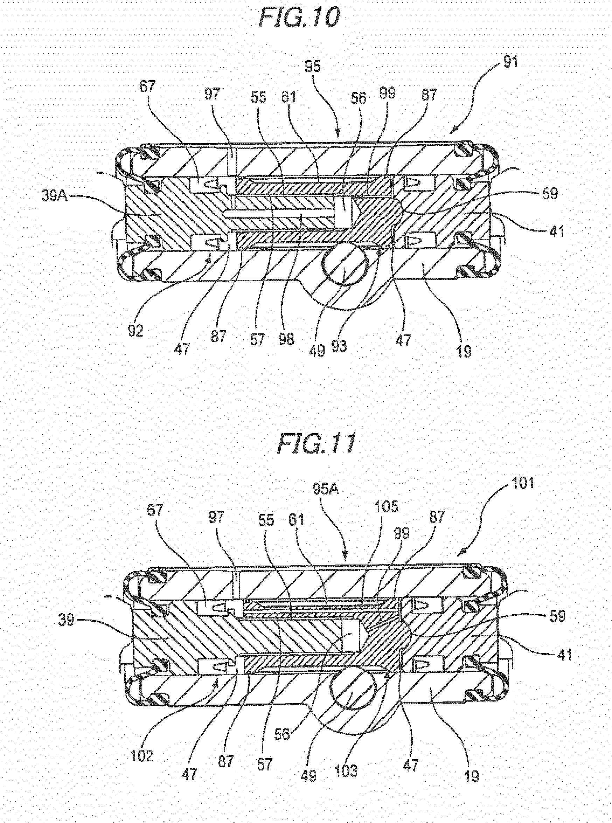

Fig. 10 is a vertical cross-sectional view of a wheel cylinder 95 in a drum brake apparatus 91 according to a fourth embodiment of the present invention.

The drum brake apparatus 91 according to the fourth embodiment has substantially the same configuration as that of the drum brake apparatus 80 according to the third embodiment except that a wheel cylinder 95 and an extension mechanism 92 are used instead of the wheel cylinder 85 and the extension mechanism 82 in the drum brake apparatus 80 according to the third embodiment, and therefore, the same members are denoted by the same reference numerals and the detailed description thereof is omitted.

The extension mechanism 92 in the fourth embodiment has the worm gear 49 which is a drive gear, and a nut member 93. The nut member 93 has the female screw portion 57 on one end side and has the bearing portion 59 on the other end side. Further, at the outer periphery of the nut member 93, the pair of O-rings 87 is disposed on the sides of both ends with the straight gear 61 interposed therebetween, and a gap between the outer periphery of the nut member 93 and the inner surface of a cylinder wall of the wheel cylinder 95 is liquid-tightly sealed. That is, the liquid chamber 47 of the wheel cylinder 95 is defined to be divided into two parts on the rear end side of the first piston 39A and the rear end side of the second piston 41 by the pair of O-rings 87.

Further, the oil hole 99 which makes the female screw portion 57 and the bearing portion 59 on the other end side communicate with each other is bored in the nut member 93, and an oil hole 98 is bored in the male screw portion 55 of a first piston 39A. Further, an oil hole 97 which communicates with the liquid chamber 47 on the rear end side of the first piston 39A is bored in the cylinder wall of the wheel cylinder 95 in the housing 19 and communicates with a master cylinder (not shown).

Therefore, the first piston 39A and the second piston 41 are driven, at the time of the parking braking operation, by the extension mechanism 92 and are driven, at the time of the service braking operation, by the pressure of the brake fluid which is pressure-supplied to each of the two liquid chambers 47 of the wheel cylinder 95.

That is, the screw engaging portion between the male screw portion 55 and the female screw portion 57 in the extension mechanism 92 communicates with the liquid chambers 47 on the rear end side of the first piston 39A and the rear end side of the second piston 41 in the housing 19. However, the engaging portion between the straight gear 61 and the worm gear 49 does not communicate with the liquid chambers 47 in the housing 19. Therefore, an area between the inner surface of the cylinder wall of the wheel cylinder 95 and the straight gear 61 is filled with grease, and thus the engaging portion between the straight gear 61 and the worm gear 49 is lubricated with grease.

Fig. 11 is a vertical cross-sectional view of a wheel cylinder 95A in a drum brake apparatus 101 according to a fifth embodiment of the present invention.

The drum brake apparatus 101 according to the fifth embodiment has substantially the same configuration as that of the drum brake apparatus 91 according to the fourth embodiment except that a wheel cylinder 95A and an extension mechanism 102 are used instead of the wheel cylinder 95 and the extension mechanism 92 in the drum brake apparatus 91 according to the third embodiment, and therefore, the same members are denoted by the same reference numerals and the detailed description thereof is omitted.

The extension mechanism 102 in the fifth embodiment has the worm gear 49 which is a drive gear, and a nut member 103. The nut member 103 has the female screw portion 57 on one end side and has the bearing portion 59 on the other end side. Further, at the outer periphery of the nut member 103, the pair of O-rings 87 is disposed on the sides of both ends with the straight gear 61 interposed therebetween, and a gap between the outer periphery of the nut member 103 and the inner surface of a cylinder wall of the wheel cylinder 95A is liquid-tightly sealed. That is, the liquid chamber 47 of the wheel cylinder 95A is defined to be divided into two parts on the rear end side of the first piston 39 and the rear end side of the second piston 41 by the pair of O-rings 87.

Further, the oil hole 99 which makes the female screw portion 57 and the bearing portion 59 communicate with each other is bored in the nut member 103, and an oil hole 105 which makes the liquid chamber 47 on the rear end side of the first piston 39 and the liquid chamber 47 on the rear end side of the second piston 41 communicate with each other is bored in the nut member 103. Further, the oil hole 97 which communicates with the liquid chamber 47 on the rear end side of the first piston 39 is bored in a cylinder wall of the wheel cylinder 95A in the housing 19 and communicates with a master cylinder (not shown).

Therefore, the first piston 39 and the second piston 41 are driven, at the time of the parking braking operation, by the extension mechanism 102 and are driven, at the time of the service braking operation, by the pressure of the brake fluid which is pressure-supplied to each of the two liquid chambers 47 of the wheel cylinder 95A.

That is, the screw engaging portion between the male screw portion 55 and the female screw portion 57 in the extension mechanism 102 communicates with the liquid chambers 47 on the rear end side of the first piston 39 and the rear end side of the second piston 41 in the housing 19. However, the engaging portion between the straight gear 61 and the worm gear 49 does not communicate with the liquid chambers 47 in the housing 19. Therefore, an area between the inner surface of the cylinder wall of the wheel cylinder 95A and the straight gear 61 is filled with grease, and thus the engaging portion between the straight gear 61 and the worm gear 49 is lubricated with grease.

As in the drum brake apparatuses 80, 91, and 101 according to the third to fifth embodiments described above, the screw engaging portion between the male screw portion 55 and the female screw portion 57, in which sliding portion resistance easily rises due to a change in viscosity resistance of grease under a low temperature environment, is lubricated with the brake fluid, and the engaging portion between the straight gear 61 and the worm gear 49, in which it is relatively difficult for sliding portion resistance to rise, would also be lubricated with grease. Therefore, it is not necessary to dispose the drive shaft 53 liquid-tightly with respect to the liquid chamber 47, and thus the O-rings 63 (refer to Fig. 5(b)) which are provided between the housing 19 and the electric actuator 13 and between the housing 19 and the drive shaft 53 become unnecessary.

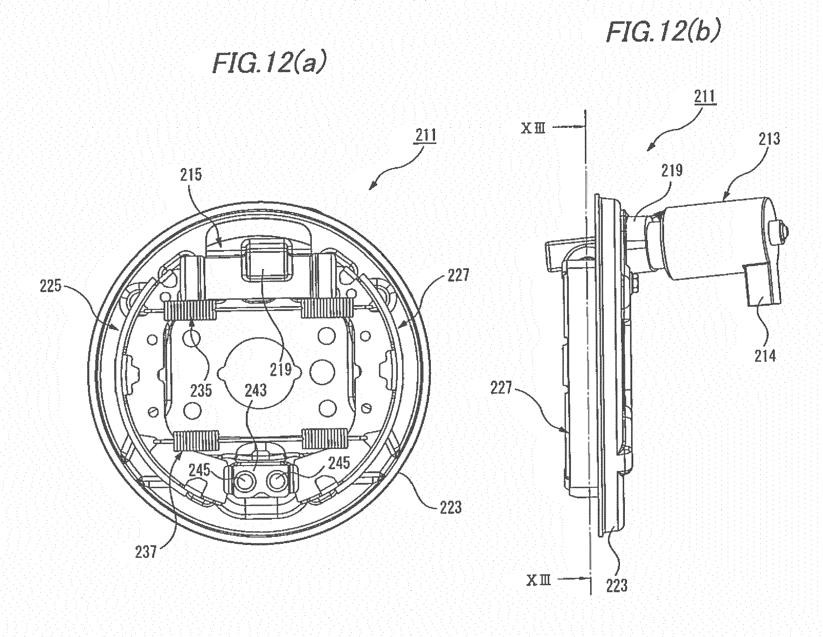

As shown in Figs. 12 to 14, a drum brake apparatus 211 according to a sixth embodiment of the present invention is configured to include, as primary members, a first brake shoe 225 and a second brake shoe 227 which are a pair of brake shoes, a wheel cylinder 215 which is interposed between adjacent ends on one side (the upper side in Figs. 12(a) and 12(b)) of the first brake shoe 225 and the second brake shoe 227, an extension mechanism 221 which is disposed between a rear end portion of a first piston 239 and a rear end portion of a second piston 241 in the wheel cylinder 215, and an electric actuator 213 for rotating the extension mechanism 221.

The drum brake apparatus 211 is integrally fixed to a vehicle body in a posture in which a backing plate 223 is substantially perpendicular to the axis of rotation of a wheel (not shown). On the backing plate 223, the first brake shoe 225 and the second brake shoe 227 which are a pair of brake shoes each having a substantially arc shape are disposed in an up-and-down direction substantially along left and right outer peripheral edges.

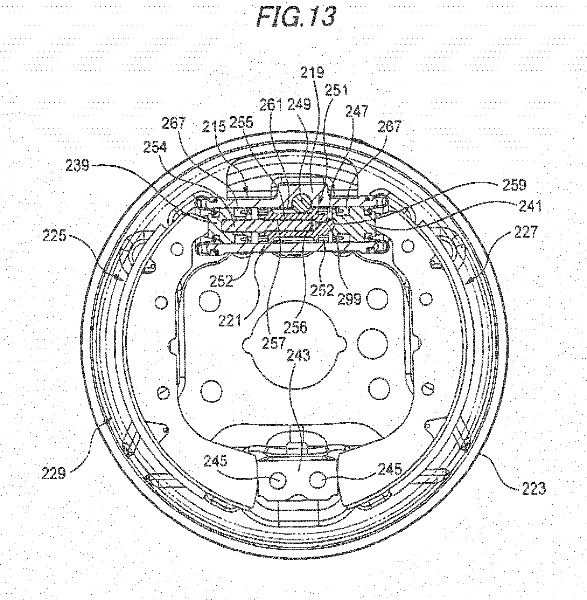

The first brake shoe 225 and the second brake shoe 227 are disposed so as to face the inner peripheral surface of a brake drum 229 (refer to Fig. 13). The first brake shoe 225 and the second brake shoe 227 are movably supported on the backing plate 223 and are made to be expandable. Further, the first brake shoe 225 and the second brake shoe 227 are elastically biased in a direction approaching each other by a pair of first shoe return spring 235 and second shoe return spring 237.

The wheel cylinder 215 as a fluid-type actuator is interposed between the adjacent ends on one side of the first brake shoe 225 and the second brake shoe 227 on the upper side of Fig. 12(a). The wheel cylinder 215 is mounted on the backing plate 223, as shown in Fig. 13, and expands the first brake shoe 225 and the second brake shoe 227 by pushing the adjacent ends on one side in a direction away from each other by the first piston 239 and the second piston 241 which are driven by the pressure (fluid pressure) of the brake fluid which is pressure-supplied from a master cylinder (not shown) to a liquid chamber 247, at the time of the service braking operation.

An anchor 243 is fixed to the backing plate 223 between adjacent ends on the other side of the first brake shoe 225 and the second brake shoe 227 on the lower side of Fig. 12(a). The anchor 243 is integrally fixed to the backing plate 223 by a pair of rivets 245. The anchor 243 takes a brake reaction force when a braking force is generated due to upper end portions of the first brake shoe 225 and the second brake shoe 227 being pressed against the brake drum 229 by being separated from each other by the wheel cylinder 215.

As shown in Fig, 13, the extension mechanism 221 which lies on substantially the same straight line as the wheel cylinder 215 is disposed in the liquid chamber 247 between the rear end portion of the first piston 239 and the rear end portion of the second piston 241 in the wheel cylinder 215. The extension mechanism 221 is rotated in one direction, thereby driving the first piston 239 and the second piston 241 in a direction away from each other, at the time of the parking braking operation.

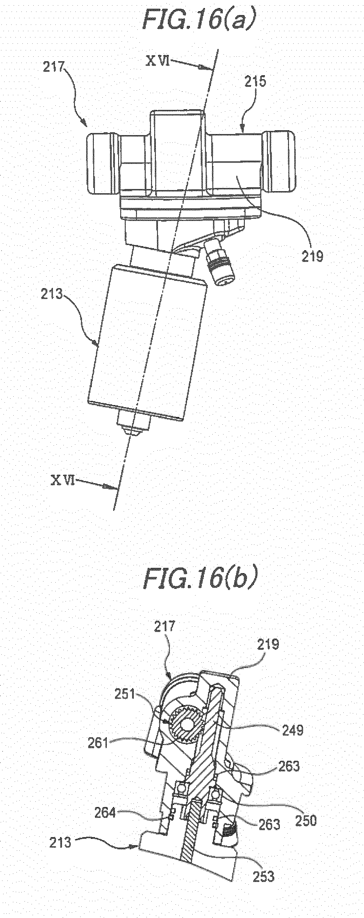

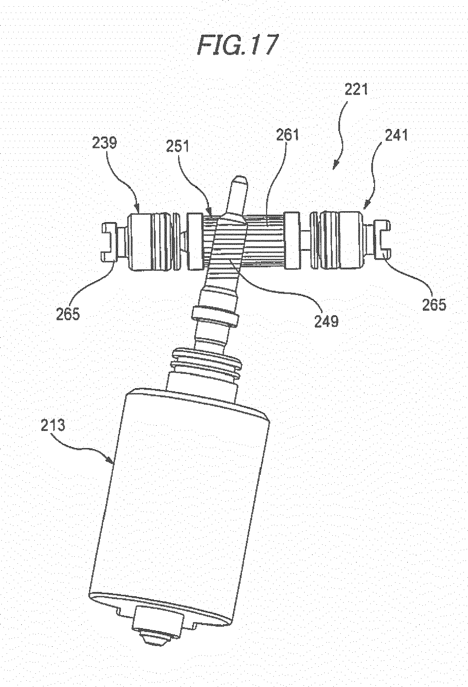

As shown in Figs. 13 and 17, the extension mechanism 221 of the sixth embodiment has a worm gear 249 which is a drive gear, and a nut member 251. The worm gear 249 is rotatably supported on a housing 219 through a radial bearing 250 and is rotated to be spline-coupled to a drive shaft 253 of the electric actuator 213 (refer to Fig. 16(b)). The nut member 251 has, on one end side thereof, a female screw portion 257 which is screwed to a male screw portion 255 of a spindle 254 coaxially fitted (for example, width-across-flat-fitted, spline-fitted, or the like) to the rear end portion of the first piston 239. Further, the nut member 251 has, on the other end side thereof, a bearing portion 259 which rotatably comes into contact with the rear end portion of the second piston 241, and a straight gear 261 which is engaged with the worm gear 249 disposed on the upper side is formed at the outer periphery of the nut member 251. Further, a pair of collars 252 is mounted on the sides of both ends of the nut member 251 with the straight gear 261 interposed therebetween. The collar 252 may be replaced with a bearing (a radial bearing) or a dry bearing. A contact portion between the nut member 251 and the second piston 241 is the semispherical bearing portion 259 shown in Fig. 13. The contact portion may also be made to be a bearing (a thrust bearing) or a dry bearing. Further, an oil hole 299 which makes the female screw portion 257 and the bearing portion 259 communicate with each other is bored in the nut member 251.

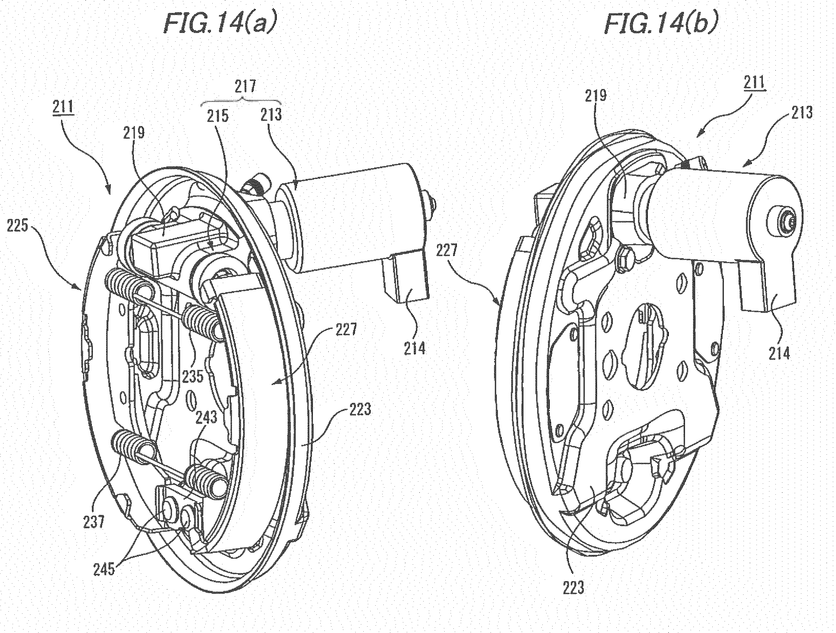

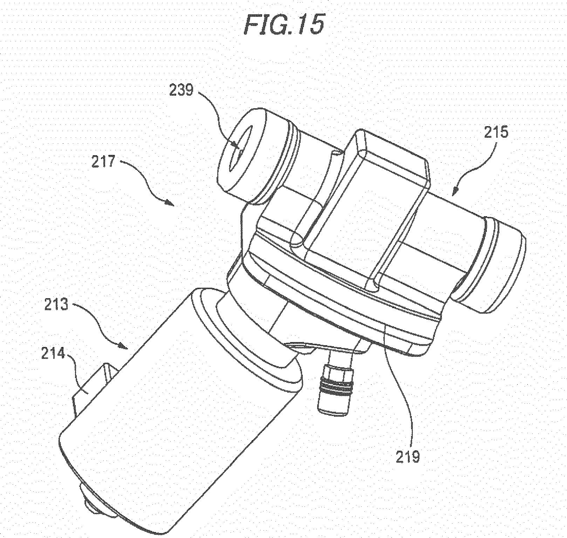

As shown in Fig. 15, the electric actuator 213 and the wheel cylinder 215 configure an electric cylinder assembly 217. The electric cylinder assembly 217 liquid-tightly covers the extension mechanism 221 with the liquid chamber 247 which is defined inwardly by the housing 219. Further, as shown in Fig. 16(b), the electric actuator 213 is fixed to the housing 219 through a snap ring 264. A connector part 214 to which a power feed connector (not shown) is fitted from a direction orthogonal to an axial direction is provided at a rear end portion of the electric actuator 213 (refer to Fig. 14). Each of a gap between the housing 219 and the electric actuator 213 and a gap between the housing 219 and the worm gear 249 is liquid-tightly sealed by an O-ring 263 (refer to Fig. 16(b)). That is, the worm gear 249 is disposed liquid-tightly with respect to the liquid chamber 247 of the wheel cylinder 215.

The first piston 239 and the second piston 241 are respectively engaged with the first brake shoe 225 and the second brake shoe 227 through engagement claws 265 (refer to Fig. 17), The first piston 239 and the second piston 241 are engaged with these brake shoes at the engagement claws 265, whereby the rotation thereof is restricted. Further, in the housing 219, cups 267 (refer to Fig. 13) for liquid-tightly sealing the liquid chamber 247 are installed at portions through which the first piston 239 and the second piston 241 penetrate. The expansion of the first brake shoe 225 and the second brake shoe 227 at the time of the parking braking operation is performed by the linear movements of the first piston 239 and the second piston 241 by the rotation of the straight gear 261.

That is, the first piston 239 and the second piston 241 are driven, at the time of the parking braking operation, by the extension mechanism 221 and are driven, at the time of the service braking operation, by the pressure of the brake fluid which is pressure-supplied to the liquid chamber 247 of the wheel cylinder 215.

Next, an operation of the drum brake apparatus 211 having the configuration described above will be described.

In the drum brake apparatus 211 of the sixth embodiment, the extension mechanism 221 for the parking braking is disposed between the rear end portion of the first piston 239 and the rear end portion of the second piston 241 in the wheel cylinder 215 and lies on substantially the same straight line as the wheel cylinder 215 for the service braking. Further, the first piston 239 and the second piston 241 are used in common in the wheel cylinder 215 and the extension mechanism 221. Therefore, it is possible to obtain a compact drum brake apparatus 211 provided with an electric parking brake apparatus, and layout characteristics are improved.

Further, in the drum brake apparatus 211 of the sixth embodiment, the worm gear 249 which is rotationally driven by the electric actuator 213 penetrates into the liquid chamber 247 of the wheel cylinder 215 in a liquid-tight manner. The drive shaft 253 of the electric actuator 213 drives the extension mechanism 221 provided in the liquid chamber 247, through the worm gear 249 penetrating into the liquid chamber 247. That is, a power transmission element between the extension mechanism 221 and the worm gear 249 is in the brake fluid.

The rotational motion of the drive shaft 253 is converted to an extension operation (linear motion) in which the first piston 239 and the second piston 241 are driven in a direction away from each other by the extension mechanism 221 in which the nut member 251 is rotated by the worm gear 249. For this reason, the extension mechanism 221 has a screw engaging portion or the bearing portion 259, and the screw engaging portion or the bearing portion 259 is sealed in the liquid chamber 247. Further, an engaging portion between the worm gear 249 which is rotated by the drive shaft 253 of the electric actuator 213 and the straight gear 261 of the nut member 251 is also lubricated with the brake fluid. Therefore, even in an engaging portion of the worm gear 249 in which due to the surfaces of teeth being in sliding contact with each other, a contact surface is heated to a high temperature, whereby a decrease in efficiency easily occurs and sliding portion resistance easily rises, a change in viscosity resistance under a low temperature environment does not easily occur unlike with lubrication with grease, and a variation in rotation sliding resistance is reduced.

Therefore, according to the drum brake apparatus 211 according to the sixth embodiment, the transmission efficiency of a parking force is stable.

Further, in the drum brake apparatus 211 of the sixth embodiment, at the time of the parking braking operation, the worm gear 249 penetrating into the liquid chamber 247 is rotated by the drive shaft 253. The rotation of the worm gear 249 is transmitted to the straight gear 261 of the nut member 251. In the nut member 251 which is rotated by the worm gear 249, the female screw portion 257 on the inside thereof is rotated with respect to the male screw portion 255 of the spindle 254. In the first piston 239 to which the spindle 254 is coaxially fitted, the rotation thereof is restricted, whereby a tip portion thereof pushes the first brake shoe 225 due to the rotation of the female screw portion 257 screwed to the male screw portion 255. In this way, an upper end portion of the first brake shoe 225 is pushed out toward the outer periphery side, thereby being pressed against the brake drum 229. Further, due to a reaction force thereof, the nut member 251 and the bearing portion 259 are pushed out toward the outer periphery side, and thus an upper end portion of the second brake shoe 227 is pressed against the brake drum 229. As a result, a braking force is generated by the first brake shoe 225 and the second brake shoe 227.

Sliding surfaces such as a screw engaging portion between the worm gear 249 and the straight gear 261 in the extension mechanism 221, a screw engaging portion between the female screw portion 257 and the male screw portion 255, and the bearing portion 259 which comes into contact with the nut member 251 are lubricated in the liquid chamber 247, because a sufficient amount of brake fluid is present in the liquid chamber 247. Therefore, in the extension mechanism 221, a problem (for example, a rise in rotational resistance, wear of a sliding surface, or the like) due to running out of a lubricant during a period of long-term use does not occur. That is, in the extension mechanism 221, the screw engaging portion between the female screw portion 257 and the male screw portion 255, which is a sliding contact in which sliding portion resistance easily rises, is reliably lubricated with the brake fluid. Therefore, a sufficient amount of brake fluid is present with respect to the sliding surfaces, and therefore, the screw engaging portion is not easily affected by deterioration of lubricating performance due to intervention of abrasion powder and generation of heat is suppressed, whereby a decrease in efficiency does not easily occur.

Further, in the drum brake apparatus 211 of the sixth embodiment, the female screw portion 257 communicates with the liquid chamber 247 of the wheel cylinder 215 through the oil hole 299 bored in the nut member 251, and therefore, the screw engaging portion between the female screw portion 257 and the male screw portion 255 would be reliably lubricated with the brake fluid. Further, the oil hole 299 is bored on the side opposite to the screw engaging portion of the nut member 251 formed in a cap nut shape, whereby an air release property of an internal space 256 of the nut member 251 is improved. Further, in the internal space 256 which communicates with the liquid chamber 247 through the oil hole 299, when the female screw portion 257 of the nut member 251 and the male screw portion 255 of the spindle 254 rotate relatively, a change in volume is not inhibited, and thus it is possible to smoothly move the first piston 239 and second piston 241.

Further, in the drum brake apparatus 211 of the sixth embodiment, a drive gear which is engaged with the straight gear 261 of the nut member 251 is the worm gear 249 having irreversibility, and therefore, return rotation of the nut member 251 due to the reaction force that the brake shoes receive is prevented. Therefore, even if energization to the electric actuator 213 is stopped, braking of the parking brake is prevented from being released due to return rotation of the nut member 251. Therefore, a reversible screw having a large lead would also be used for each of the male screw portion 255 and the female screw portion 257 in the extension mechanism 221.

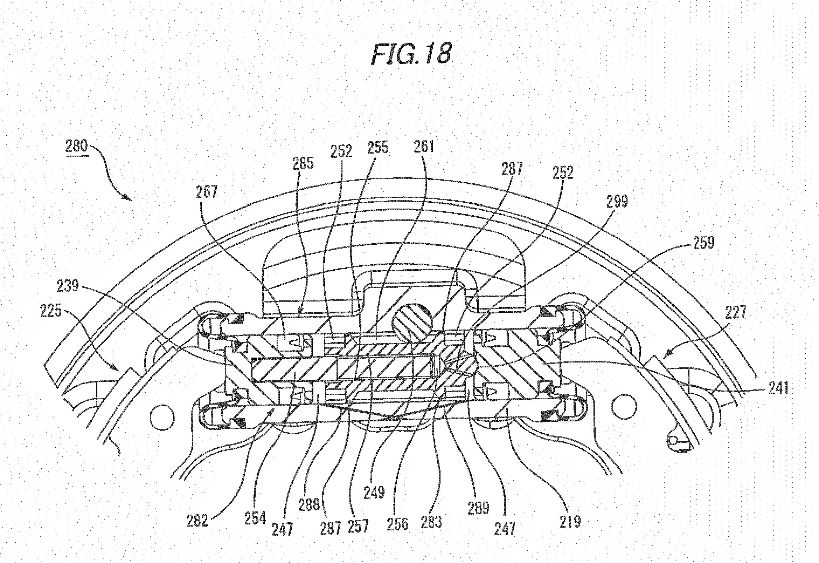

Fig. 18 is an enlarged cross-sectional view of a main section of a drum brake apparatus 280 according to a seventh embodiment of the present invention.

The drum brake apparatus 280 according to the seventh embodiment has substantially the same configuration as that of the drum brake apparatus 211 according to the sixth embodiment except that a wheel cylinder 285 and an extension mechanism 282 are used instead of the wheel cylinder 215 and the extension mechanism 221 in the drum brake apparatus 211 according to the sixth embodiment, and therefore, the same members are denoted by the same reference numerals and the detailed description thereof is omitted.

The extension mechanism 282 in the seventh embodiment has the worm gear 249 and a nut member 283. The nut member 283 has the female screw portion 257 on one end side and has the bearing portion 259 on the other end side. Further, at the outer periphery of the nut member 283, a pair of O-rings 287 is disposed on the side of both ends with the straight gear 261 interposed therebetween, and a gap between the outer periphery of the nut member 283 and the inner surface of a cylinder wall of the wheel cylinder 285 is liquid-tightly sealed. That is, the liquid chamber 247 of the wheel cylinder 285 is defined to be divided into two parts on the rear end side of the first piston 239 and the rear end side of the second piston 241 by the pair of O-rings 287. Further, the oil hole 299 which makes the female screw portion 257 and the bearing portion 259 communicate with each other is bored in the nut member 283.

Further, an oil hole 288 which communicates with the liquid chamber 247 on the rear end side of the first piston 239, and an oil hole 289 which communicates with the liquid chamber 247 on the rear end side of the second piston 241 are bored in the cylinder wall of the wheel cylinder 285 in the housing 219 and communicate with a master cylinder (not shown).

Therefore, the first piston 239 and the second piston 241 are driven, at the time of the parking braking operation, by the extension mechanism 282 and are driven, at the time of the service braking operation, by the pressure of the brake fluid which is pressure-supplied to each of the two liquid chambers 247 of the wheel cylinder 285.

That is, the screw engaging portion between the male screw portion 255 and the female screw portion 257 in the extension mechanism 282 communicates with the liquid chambers 247 on the rear end side of the first piston 239 and the rear end side of the second piston 241 in the housing 219. However, the engaging portion between the straight gear 261 and the worm gear 249 does not communicate with the liquid chambers 247 in the housing 219. Therefore, an area between the inner surface of the cylinder wall of the wheel cylinder 285 and the straight gear 261 is filled with grease, and thus the engaging portion between the straight gear 261 and the worm gear 249 is lubricated with grease.

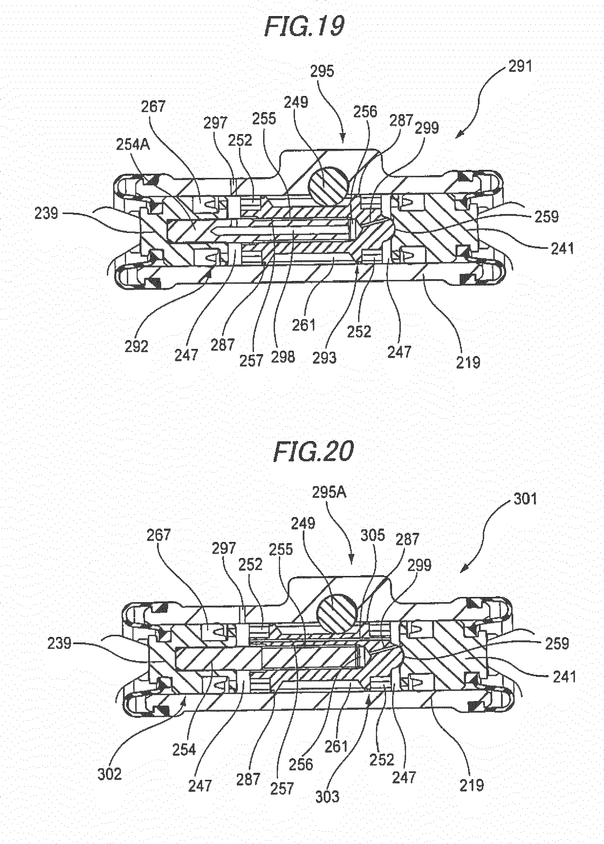

Fig. 19 is a vertical cross-sectional view of a wheel cylinder 295 in a drum brake apparatus 291 according to an eighth embodiment of the present invention.

The drum brake apparatus 291 according to the eighth embodiment has substantially the same configuration as that of the drum brake apparatus 280 according to the seventh embodiment except that a wheel cylinder 295 and an extension mechanism 292 are used instead of the wheel cylinder 285 and the extension mechanism 282 in the drum brake apparatus 280 according to the seventh embodiment, and therefore, the same members are denoted by the same reference numerals and the detailed description thereof is omitted.

The extension mechanism 292 in the eighth embodiment has the worm gear 249 and a nut member 293. The nut member 293 has the female screw portion 257 on one end side and has the bearing portion 259 on the other end side. Further, at the outer periphery of the nut member 293, the pair of O-rings 287 is disposed on the sides of both ends with the straight gear 261 interposed therebetween, and a gap between the outer periphery of the nut member 293 and the inner surface of a cylinder wall of the wheel cylinder 295 is liquid-tightly sealed. That is, the liquid chamber 247 of the wheel cylinder 295 is defined to be divided into two parts on the rear end side of the first piston 239 and the rear end side of the second piston 241 by the pair of O-rings 287.

Further, the oil hole 299 which makes the female screw portion 257 and the bearing portion 259 on the other end side communicate with each other is bored in the nut member 293, and an oil hole 298 is bored in the male screw portion 255 of a spindle 254A coaxially fitted to the rear end portion of the first piston 239. Further, an oil hole 297 which communicates with the liquid chamber 247 on the rear end side of the first piston 239 is bored in the cylinder wall of the wheel cylinder 295 in the housing 219 and communicates with a master cylinder (not shown).

Therefore, the first piston 239 and the second piston 241 are driven, at the time of the parking braking operation, by the extension mechanism 292 and are driven, at the time of the service braking operation, by the pressure of the brake fluid which is pressure-supplied to each of the two liquid chambers 247 of the wheel cylinder 295.

That is, the screw engaging portion between the male screw portion 255 and the female screw portion 257 in the extension mechanism 292 communicates with the liquid chambers 247 on the rear end side of the first piston 239 and the rear end side of the second piston 241 in the housing 219. However, the engaging portion between the straight gear 261 and the worm gear 249 does not communicate with the liquid chambers 247 in the housing 219. Therefore, an area between the inner surface of the cylinder wall of the wheel cylinder 295 and the straight gear 261 is filled with grease, and thus the engaging portion between the straight gear 261 and the worm gear 249 is lubricated with grease.

Fig. 20 is a vertical cross-sectional view of a wheel cylinder 295A in a drum brake apparatus 301 according to a ninth embodiment of the present invention.

The drum brake apparatus 301 according to the ninth embodiment has substantially the same configuration as that of the drum brake apparatus 291 according to the eighth embodiment except that a wheel cylinder 295A and an extension mechanism 302 are used instead of the wheel cylinder 295 and the extension mechanism 292 in the drum brake apparatus 291 according to the eighth embodiment, and therefore, the same members are denoted by the same reference numerals and the detailed description thereof is omitted,

The extension mechanism 302 in the ninth embodiment has the worm gear 249 and a nut member 303. The nut member 303 has the female screw portion 257 on one end side and has the bearing portion 259 on the other end side. Further, at the outer periphery of the nut member 303, the pair of O-rings 287 is disposed on the sides of both ends with the straight gear 261 interposed therebetween, and a gap between the outer periphery of the nut member 303 and the inner surface of a cylinder wall of the wheel cylinder 295A is liquid-tightly sealed. That is, the liquid chamber 247 of the wheel cylinder 295A is defined to be divided into two parts on the rear end side of the first piston 239 and the rear end side of the second piston 241 by the pair of O-rings 287.

Further, the oil hole 299 which makes the female screw portion 257 and the bearing portion 259 communicate with each other is bored in the nut member 303, and an oil hole 305 which makes the liquid chamber 247 on the rear end side of the first piston 239 and the liquid chamber 247 on the rear end side of the second piston 241 communicate with each other is bored in the nut member 303. Further, the oil hole 297 which communicates with the liquid chamber 247 on the rear end side of the first piston 239 is bored in the cylinder wall of the wheel cylinder 295A in the housing 219 and communicates with a master cylinder (not shown).

Therefore, the first piston 239 and the second piston 241 are driven, at the time of the parking braking operation, by the extension mechanism 302 and are driven, at the time of the service braking operation, by the pressure of the brake fluid which is pressure-supplied to each of the two liquid chambers 247 of the wheel cylinder 295A.

That is, the screw engaging portion between the male screw portion 255 and the female screw portion 257 in the extension mechanism 302 communicates with the liquid chambers 247 on the rear end side of the first piston 239 and the rear end side of the second piston 241 in the housing 219. However, the engaging portion between the straight gear 261 and the worm gear 249 does not communicate with the liquid chambers 247 in the housing 219. Therefore, an area between the inner surface of the cylinder wall of the wheel cylinder 295A and the straight gear 261 is filled with grease, and thus the engaging portion between the straight gear 261 and the worm gear 249 is lubricated with grease.

As in the drum brake apparatuses 280, 291, and 301 according to the seventh to ninth embodiments described above, the screw engaging portion between the male screw portion 255 and the female screw portion 257, in which sliding portion resistance easily rises due to a change in viscosity resistance of grease under a low temperature environment, is lubricated with the brake fluid, and the engaging portion between the straight gear 261 and the worm gear 249, in which it is relatively difficult for sliding portion resistance to rise, would also be lubricated with grease. Therefore, it is not necessary to dispose the worm gear 249 liquid-tightly with respect to the liquid chamber 247, and thus the O-ring 263 (refer to Fig. 16(b)) which is provided between the housing 219 and the worm gear 249 becomes unnecessary.

### Industrial Applicability

The drum brake apparatus according to the present invention may be made to be compact while being provided with an electric parking brake apparatus, because the extension mechanism for parking braking is disposed between the rear end portion of the first piston and the rear end portion of the second piston in the wheel cylinder and lies on substantially the same straight line as the wheel cylinder for service braking and the first piston and the second piston are used in common in the wheel cylinder and the extension mechanism.

### Reference Signs List

11: drum brake apparatus
13: electric actuator
15: wheel cylinder
21: extension mechanism
23: backing plate
25: first brake shoe (brake shoe)
27: second brake shoe (brake shoe)
29: brake drum
39: first piston
41: second piston
47: liquid chamber
49: worm gear (drive gear)
51: nut member
53: drive shaft
55: male screw portion
57: female screw portion
59: bearing portion
61: straight gear
75: transmission gear device
77: final gear (drive gear)

## Claims

1. A drum brake apparatus (11) comprising:
a pair of brake shoes (25, 27) disposed so as to face an inner peripheral surface of a brake drum (29) and movably supported on a backing plate (23);
a wheel cylinder (15) which is interposed between adjacent ends on one sides of the pair of brake shoes (25, 27) and configured to expand the pair of brake shoes (25, 27) by pushing the adjacent ends of the pair of brake shoes (25, 27) at a tip portion of a first piston (39) and a tip portion of a second piston (41) by fluid pressure;
an extension mechanism (21) which is disposed between a rear end portion of the first piston (39) and a rear end portion of the second piston (41) in the wheel cylinder (15) and configured to rotate in one direction to drive the first piston (39) and the second piston (41) in a direction away from each other; and
an electric actuator (13) configured to rotate the extension mechanism (21), **characterized in that** the extension mechanism (21) includes a drive gear (77) and a nut member (51), wherein the drive gear (77) is to be rotated by a drive shaft (53) of the electric actuator (13), and wherein a female screw (57), a bearing portion (59) and a straight gear (61) are provided on the nut member (51), wherein the female screw portion (57) which is screwed to a male screw portion (55) coaxially provided at the rear end portion of the first piston (39) is provided on one end side of the nut member (51), wherein the bearing portion (59) which rotatably contacts with the rear end portion of the second piston (41) is provided on the other end side of the nut member (51), and wherein the straight gear (61) which is engaged with the drive gear (77) is provided in an outer periphery of the nut member (51), and
wherein at least the male screw portion (55) and the female screw portion (57) in the extension mechanism (21) communicate with a liquid chamber (47) of the wheel cylinder (15).

2. The drum brake apparatus (11) according to Claim 1, wherein an oil hole (99) which makes the female screw portion (57) and the bearing portion (59) communicate with each other is formed in the nut member (51).

3. The drum brake apparatus (11) according to Claim 2, wherein the straight gear (61) and the drive gear (77) communicate with the liquid chamber (47) of the wheel cylinder (15), and wherein the drive shaft (53) of the electric actuator (15) is disposed liquid-tightly with respect to the liquid chamber (47) of the wheel cylinder (15).

4. The drum brake apparatus (11) according to any one of Claims 2 or 3, wherein the drive gear (77) is a worm gear provided on the drive shaft (53).

5. The drum brake apparatus (11) according to any one of Claims 2 or 3, wherein the drive gear (77) is a final gear of a transmission gear device which transmits a rotation of the drive shaft (53).

## Patentansprüche

1. Eine Trommelbremsvorrichtung (11), umfassend:
ein Paar von Bremsbacken (25, 27), die so angeordnet sind, dass sie einer inneren Umfangsfläche einer Bremstrommel (29) zugewandt sind, und die beweglich auf einer Grundplatte (23) gelagert sind;
einen Radzylinder (15), der zwischen benachbarten Enden auf einer Seite des Paars von Bremsbacken (25, 27) angeordnet ist und so konfiguriert ist, dass er das Paar von Bremsbacken (25, 27) ausdehnt, indem er die benachbarten Enden des Paars von Bremsbacken (25, 27) durch Fluiddruck auf einen Spitzenabschnitt eines ersten Kolbens (39) und einen Spitzenabschnitt eines zweiten Kolbens (41) drückt;
einen Ausfahrmechanismus (21), der zwischen einem hinteren Endabschnitt des ersten Kolbens (39) und einem hinteren Endabschnitt des zweiten Kolbens (41) in dem Radzylinder (15) angeordnet ist und so konfiguriert ist, dass er sich in einer Richtung dreht, um den ersten Kolben (39) und den zweiten Kolben (41) in einer Richtung voneinander weg anzutreiben; und
einen elektrischen Aktuator (13), der so konfiguriert ist, dass er den Ausfahrmechanismus (21) dreht,
**dadurch gekennzeichnet, dass** der Ausfahrmechanismus (21) ein Antriebszahnrad (77) und ein Mutterelement (51) umfasst, wobei das Antriebszahnrad (77) durch eine Antriebswelle (53) des elektrischen Aktuators (13) gedreht werden kann, und wobei ein Innengewinde (57), ein Lagerabschnitt (59) und ein gerades Zahnrad (61) auf dem Mutterelement (51) vorgesehen sind, wobei der Innengewindeabschnitt (57), der mit einem koaxial am hinteren Endabschnitt des ersten Kolbens (39) vorgesehenen Außengewindeabschnitt (55) verschraubt ist, an einer Endseite des Mutterelements (51) vorgesehen ist, wobei der Lagerabschnitt (59), der drehbar mit dem hinteren Endabschnitt des zweiten Kolbens (41) in Kontakt steht, an der anderen Endseite des Mutterelements (51) vorgesehen ist, und wobei das gerade Zahnrad (61), das mit dem Antriebszahnrad (77) in Eingriff steht, an einem Außenumfang des Mutterelements (51) vorgesehen ist, und
wobei zumindest der Außengewindeabschnitt (55) und der Innengewindeabschnitt (57) in dem Ausfahrmechanismus (21) mit einer Flüssigkeitskammer (47) des Radzylinders (15) in Verbindung stehen.

2. Trommelbremsvorrichtung (11) nach Anspruch 1, wobei in dem Mutterelement (51) ein Ölloch (99) ausgebildet ist, das den Innengewindeabschnitt (57) und den Lagerabschnitt (59) miteinander in Verbindung bringt.

3. Trommelbremsvorrichtung (11) nach Anspruch 2, wobei das gerade Zahnrad (61) und das Antriebszahnrad (77) mit der Flüssigkeitskammer (47) des Radzylinders (15) in Verbindung stehen, und wobei die Antriebswelle (53) des elektrischen Aktuators (15) flüssigkeitsdicht bezüglich der Flüssigkeitskammer (47) des Radzylinders (15) angeordnet ist.

4. Trommelbremsvorrichtung (11) nach einem der Ansprüche 2 oder 3, wobei das Antriebszahnrad (77) ein auf der Antriebswelle (53) vorgesehenes Schneckengetriebe ist.

5. Trommelbremsvorrichtung (11) nach einem der Ansprüche 2 oder 3, wobei das Antriebszahnrad (77) ein Endzahnrad einer Getriebevorrichtung ist, die eine Drehung der Antriebswelle (53) überträgt.

## Revendications

1. Dispositif de frein à tambour (11) comprenant:
une paire de sabots de frein (25, 27) disposés de manière à faire face à une surface périphérique intérieure d'un tambour de frein (29) et supportées de manière mobile sur une plaque d'appui (23);
un cylindre de roue (15) qui est interposé entre des extrémités adjacentes sur un côté de la paire de sabots de frein (25, 27) et configuré pour dilater la paire de sabots de frein (25, 27) en poussant les extrémités adjacentes de la paire de sabots de frein (25, 27) au niveau d'une partie de pointe d'un premier piston (39) et d'une partie de pointe d'un second piston (41) par pression de fluide ;
un mécanisme d'extension (21) qui est disposé entre une partie d'extrémité arrière du premier piston (39) et une partie d'extrémité arrière du second piston (41) dans le cylindre de roue (15) et configuré pour tourner dans un sens pour entraîner le premier piston (39) et le second piston (41) dans un sens qui les éloigne l'un de l'autre ; et
un actionneur électrique (13) configuré pour faire tourner le mécanisme d'extension (21), **caractérisé en ce que** le mécanisme d'extension (21) comprend un engrenage d'entraînement (77) et un élément d'écrou (51), dans lequel l'engrenage d'entraînement (77) doit être mis en rotation par un arbre d'entraînement (53) de l'actionneur électrique (13), et dans lequel une vis femelle (57), une partie de palier (59) et un engrenage droit (61) sont prévus sur l'élément d'écrou (51), dans lequel la partie de vis femelle (57) qui est vissée à une partie de vis mâle (55) prévue coaxialement à la partie d'extrémité arrière du premier piston (39) est prévue sur un côté d'extrémité de l'élément d'écrou (51), dans lequel la partie de palier (59) qui est en contact de rotation avec la partie d'extrémité arrière du second piston (41) est prévue sur l'autre côté d'extrémité de l'élément d'écrou (51), et dans lequel la roue droite (61) qui est en prise avec la roue d'entraînement (77) est prévue dans une périphérie extérieure de l'élément d'écrou (51), et
dans lequel au moins la partie de vis mâle (55) et la partie de vis femelle (57) dans le mécanisme d'extension (21) communiquent avec une chambre de liquide (47) du cylindre de roue (15).

2. Dispositif de frein à tambour (11) selon la revendication 1, dans lequel un trou d'huile (99) qui fait communiquer la partie de vis femelle (57) et la partie de palier (59) est formé dans l'élément d'écrou (51).

3. Dispositif de frein à tambour (11) selon la revendication 2, dans lequel l'engrenage droit (61) et l'engrenage d'entraînement (77) communiquent avec la chambre à liquide (47) du cylindre de roue (15), et dans lequel l'arbre d'entraînement (53) de l'actionneur électrique (15) est disposé de manière étanche au liquide par rapport à la chambre à liquide (47) du cylindre de roue (15).

4. Dispositif de frein à tambour (11) selon l'une quelconque des revendications 2 ou 3, dans lequel l'engrenage d'entraînement (77) est une vis sans fin prévue sur l'arbre d'entraînement (53).

5. Dispositif de frein à tambour (11) selon l'une quelconque des revendications 2 ou 3, dans lequel l'engrenage d'entraînement (77) est un engrenage final d'un dispositif de transmission qui transmet une rotation de l'arbre d'entraînement (53).
